# EUROPEAN PATENT SPECIFICATION

(11) **EP 2 751 533 B1**
(45) Date of publication and mention of the grant of the patent: **27.05.2020**
(21) Application number: 11749196.9
(22) Date of filing: 31.08.2011
(51) Int. Cl.: G01J 3/50, G01J 3/02, G01J 3/10, G01J 3/46

(54) **COLOR MEASUREMENT APPARATUS**
FARBMESSGERÄT
COLORIMÈTRE

(43) Date of publication of application: 09.07.2014
(73) Proprietor: Barbieri Electronic OHG des Barbieri Siegfried & C., 39042 Bressanone (BZ) (IT)
(72) Inventor: BARBIERI, Markus, I-39040 Varna (Bolzano) (IT); BARBIERI, Stefan, 39012 Merano (Bolzano) (IT)
(74) Representative: Marchi, Paolo
(86) International application number: PCT/EP2011/064947
(87) International publication number: WO 2013/029665

(56) References cited:
- US-A1- 2005 243 318
- US-A1- 2009 268 254
- US-B2- 6 736 502

## Description

### FIELD

The present disclosure relates to the field of color measuring on a printed item. To be more specific, the present disclosure relates to a color measurement apparatus for measuring a color on a printed item, for example on a test chart. For example, the measurement is a reflective or transmissive measurement.

### BACKGROUND

In order to calibrate a digital printer to reproduce colors with a desired quality and accuracy, a sheet of test color patches arranged in a predetermined pattern is printed by the printer.

Such a printed sheet is a color measurement chart or test chart, which comprises one or more rows of fields or patches having different reference colors, i.e. different test colors.

The printed sheet is scanned by a measurement device like a spectrophotometer, which gauges the color patches and provides a set of data characterizing the printed colors of the patches of the test chart. These data are spectral values of the colors.

The set of data, which is representative of the producible color gamut of the printer, is compared with the known expected data for the corresponding reference colors and then it is used to calibrate the printer to correctly reproduce colors.

Known spectrophotometer devices are commonly used in the color measuring field for printer calibration and for printer control.

For example, US patent application US 7,466,416 discloses a portable color measurement device including a hand-held color measurement instrument. This known color measurement device includes a planar member having a raised rib which is a scanning guide for the color measurement instrument. The color measurement instrument is positioned on the scanning guide and is movable along the latter.

The planar member includes also an elongated slot which is parallel to the scanning guide. The color measurement instrument has a sensor which is positioned above the elongated slot. A patch row of a test chart is positioned below the elongated slot; the colors of the patch row are measured by the sensor through the elongated slot during a run of the color measurement instrument along the scanning guide.

The length of the elongated slot and of the scanning guide is the maximum measurable length of test chart that can be measured in a single run.

Therefore, in order to be able to measure a long test chart, these known devices usually have a large size and are rather bulky.

As a consequence, the advantages of having a portable device are partially lost due to the large dimensions of the device.

### SUMMARY

The present disclosure is based on the technical problem of providing a color measurement apparatus which is useful for improving the prior-art devices by overcoming at least one of the disadvantages mentioned with reference to prior art and/or being able to achieve further advantages.

The solution to the technical problem can be obtained by a color measurement apparatus as defined in independent claim 1.

Secondary features of the subject of the present disclosure are set forth in the corresponding dependent claims.

The color measurement apparatus according to the present disclosure is useful for process and quality control in the digital printing field.

A color measurement apparatus according to the present disclosure comprises a first body, a second body including a sensor for measuring color data, and a guiding rail interposed between the first body and the second body. The second body is movable relative to the first body along a direction that, in use, is a measurement path direction. To be more specific, the sensor is a spectral sensor or a spectrophotometer.

In other words, the second body is a movable measuring head and the first body is a supporting body, or base, which is stationary during a measuring movement of the second body.

The second body can slide along the guiding rail in a first direction and the guiding rail can slide along the first body in a second direction parallel to the first direction. In other words, the overall measurement run of the second body relative to the first body is a movement which is a combination of two parallel sliding movements. Basically, the connection between the second body and the first body is similar to a telescopic guide or telescopic connector.

This is useful for providing a color measurement apparatus having a length of a measurement run which is much longer than the corresponding dimension of the apparatus. For example, the length of the measurement run can be more than two times the length of the corresponding side of the measurement apparatus. Therefore, the color measurement apparatus can be much smaller, when not in use, than a known device having a same length of the measurement run.

According to the invention, the color measurement apparatus comprises directing means for directing a translational movement of the apparatus along a translation direction which is perpendicular to the measurement path.

This is useful for providing a color measurement apparatus which is able to easily measure a test chart having a plurality of rows of color patches. In fact, after a first row has been measured in a first measurement run, the color measurement apparatus is moved in the translation direction to the second row. The second row is measured in a second measurement run and the apparatus is then moved to a successive row. The procedure is repeated until all rows have been measured.

The directing means, which is configured to prevent movements of the first body in directions different from the translation direction, is useful for assuring that the color measurement apparatus is moved perpendicular to the measurement path, so that a following measurement run is parallel to the previous measurement run and is kept aligned with the row of color patches to be measured.

The directing means includes a pivoted wheel or roller, or a couple of pivoted wheels or rollers configured to rotate jointly.

In one embodiment, the second body includes also a camera to take an image of the test chart together with measuring color spectrum data. The image can be an electronic image, i.e. a set of digital data which is representative of an optical image or a picture of the test chart.

The camera is useful for improving evaluation of the print quality and/or for assisting the spectral sensor. For example, the camera allows to detect defects which are below the sensitivity of the spectral sensor, to check if the printing elements work correctly and/or if the printing elements are properly aligned with each other, to check if the spectral sensor is correctly positioned on a row of color patches, or to read row codes of the test chart.

Moreover, the camera allows to measure an "image quality" or "print quality" of a printed item and to provide measured values of parameters that are prescribed by image quality regulations; for example, the prescribed parameters include color uniformity, drop width, drop overlap, etc.

Further advantages, characteristic features and the modes of use of the subject of the present disclosure will become clear from the following detailed descriptions of preferred embodiments thereof, provided solely by way of non-limiting examples.

It is clear, however, that each embodiment described in the present disclosure may have one or more of the mentioned advantages; in any case it is not required that each embodiment should have simultaneously all the mentioned advantages.

It is also to be understood that the scope of the present disclosure includes all the possible combinations of the embodiments mentioned above and those described with reference to the following detailed description.

### BRIEF DESCRIPTION OF THE DRAWINGS

Reference shall be made to the figures of the accompanying drawings, in which:
- Figure 1 shows a perspective view of a test chart including a plurality of color patches;
- Figure 2 shows a schematic view of how a color patch is printed by a printer;
- Figure 3 shows a perspective view of a color measurement apparatus according to the present disclosure;
- Figures 4 to 7 show partially cutaway perspective views of the color measurement apparatus according to Figure 3 in different operative positions;
- Figure 8 shows a partially cutaway top view of the color measurement apparatus according to Figure 3, where different operative positions are shown;
- Figure 9 shows a top perspective view of a measuring head of the color measurement apparatus according to Figure 3;
- Figure 10 shows a bottom perspective view of the measuring head according to Figure 9;
- Figure 11 shows a sectional view, according to section plane XI, of the measuring head according to Figure 9;
- Figure 12 shows a schematic view of an operation principle of the measuring head according to Figure 9;
- Figure 13 shows a sectional view, according to section plane XIII of Figure 11, of the measuring head according to Figure 9, from which some parts have been removed;
- Figure 14 shows a bottom perspective view of the measuring head according to Figure 9, in a second condition;
- Figure 15 shows a sectional view, according to section plane XV of Figure 14, of the measuring head according to Figure 9 in the second condition, from which some parts have been removed;
- Figures 16 and 17 show perspective views of a detail of the color measurement apparatus according to Figure 3, from which some parts have been removed, in different operative positions;
- Figure 18 shows a bottom perspective view of the color measurement apparatus according to Figure 3;
- Figures 19 and 20 show side sectional views, according to section line XIX of Figure 18, of the color measurement apparatus according to Figure 3, from which some parts have been removed, in two different positions on a support table.
- Figure 21 shows an exemplificative perspective view of the measuring head according to Figure 9 on a test chart;
- Figure 22 shows a perspective view of the color measurement apparatus according to Figure 3 during a measurement run;
- Figures 23 and 24 show top views of a detail of a second embodiment of a color measurement apparatus according to the present disclosure, in different operative positions;
- Figure 25 shows a sectional view of a second embodiment of the measuring head according to Figure 9;
- Figure 26 shows a sectional view of a third embodiment of the measuring head according to Figure 9;
- Figure 27 shows an exploded perspective view of an enlarged detail of the measuring head according to Figure 26;
- Figure 28 shows a sectional view of a fourth embodiment of the measuring head according to Figure 9.

### DESCRIPTION OF EXAMPLE EMBODIMENTS

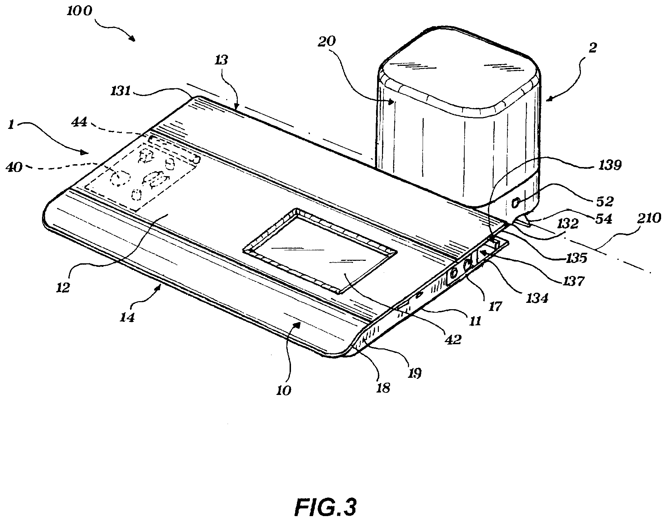

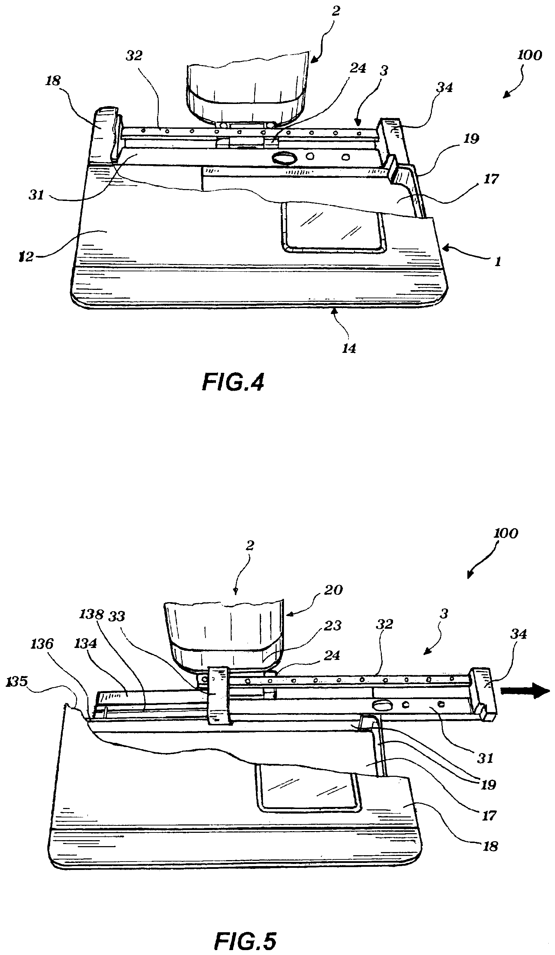

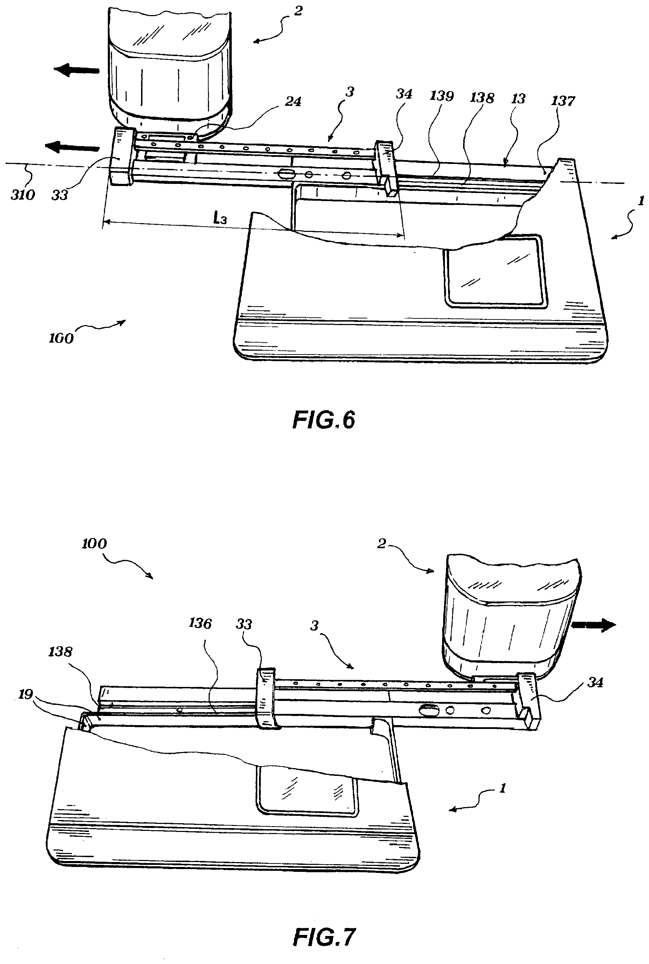

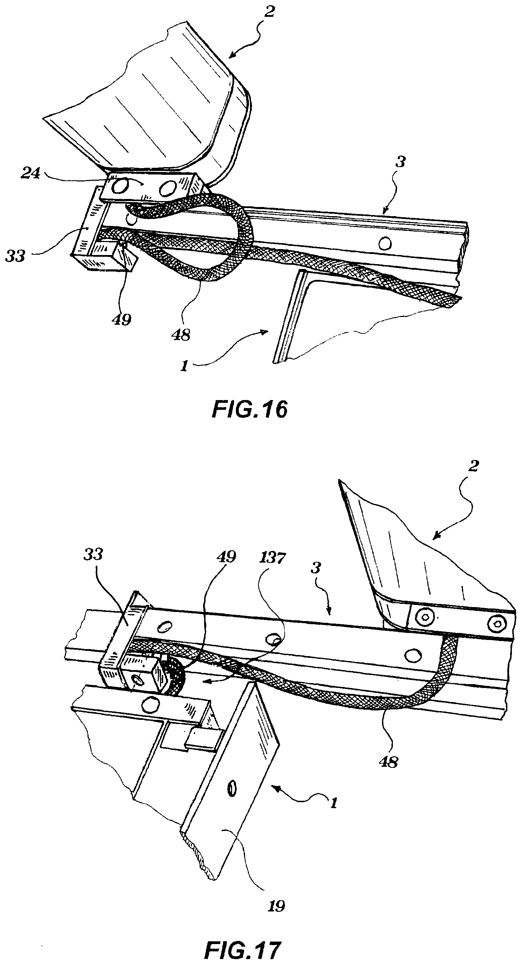

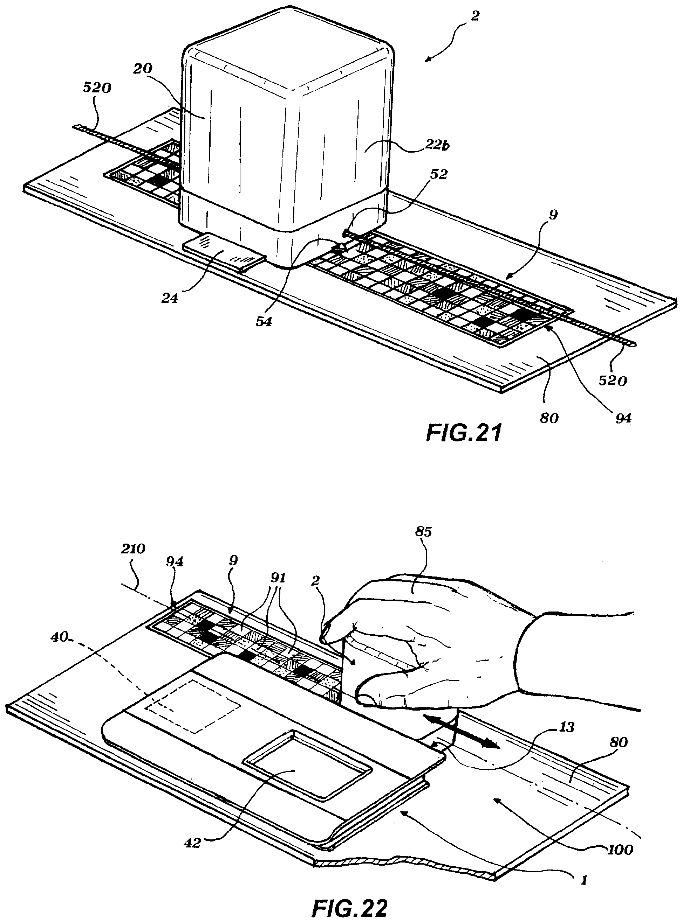

A first embodiment of a color measurement apparatus according to the present disclosure is shown in Figures 3 to 22, where it is indicated by reference number 100.

The color measurement apparatus 100 is intended for measuring a color on a printed item to establish a print quality of the printed item; to be more specific, the printed item is a test chart 9.

In the example, the test chart 9 is a sheet on which patches 91, each of them having a respective color, have been printed by a printer.

For example, the patches 91 are square-shaped and are arranged according to a plurality of parallel rows 94.

Each patch 91 is representative of a respective reference color or test color. A specific set of reference colors is chosen from standardized sets which are known in the art. Therefore, the test chart 9 is a tool for evaluating the accuracy of the printer in reproducing a specific set of reference colors.

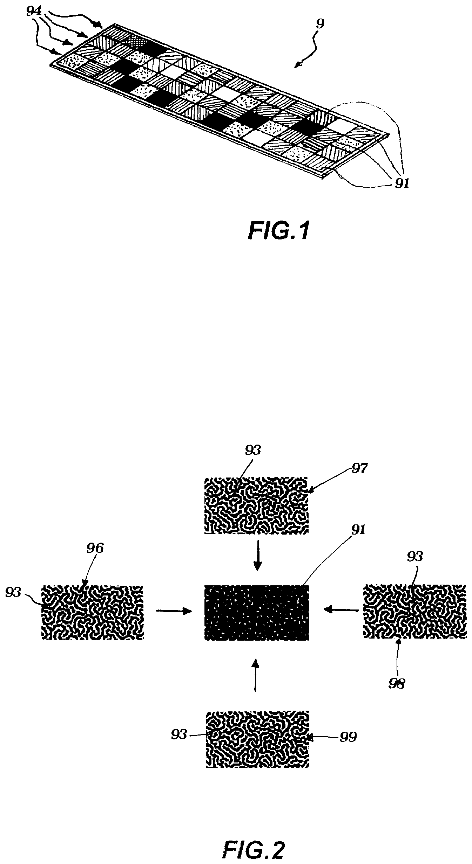

It should be considered that a color printer produces a color region by a combination of primary color printing. For example, Figure 2 shows an enlarged view of a portion of a color patch 91, which is obtained by superimposition of black printing 96, magenta printing 97, yellow printing 98, and cyan printing 99.

The enlarged view of Figure 2 shows a print pattern 93 for each primary color printing. In fact, each primary color is printed by a respective printing element of a printhead according to a prescribed path which, when seen in an enlarged view, appears as a print pattern. The color of the patch 91 is formed by the combination and overlapping of the primary color print patterns 93.

The color measurement apparatus 100 is a portable apparatus. In other words, it is easy to transport and independent from a computer, then it can be used also away from the desk and directly on a printer.

The color measurement apparatus 100 comprises a first body 1 and a second body 2. The first body 1, or base, includes a processing unit 40 and a display 42; it may also contain an internal battery 44. The second body 2 is a measuring head and includes a sensor 26 for measuring color data of the test chart 9.

The measuring head 2 is movable relative to the base 1 along a direction 210 which defines a measurement path. In fact, during a measurement run, the base 1 and the test chart 9 are motionlessly resting on a support table 80, whereas the measuring head 2 is moved along the measurement path 210 to measure a row 94 of color patches 91.

The color measurement apparatus 100 includes also a guiding rail 3 which is positioned between the base 1 and the measuring head 2. In other words, the guiding rail 3 connects the measuring head 2 to the base 1 and guides the movement of the measuring head 2 relative to the base 1.

The base 1 comprises a first casing 10 having a box-like shape; to be more specific, the base 1 is tablet-shaped.

The first casing 10 has a first face 11, or bottom face, which faces the support table 80 during use, and a second face 12, or top face opposite to the bottom face 11, which faces a user during use. The processing unit 40 is positioned inside the first casing 10.

The display 42 is positioned at the top face 12, so it can be seen by the user. For example, the display 42 is a touch-screen display. The display 42 facilitates the interaction between the color measurement apparatus 100 and the user, giving also an immediate feedback about the measurement results. For example, prearranged graphic symbols or graphic elements are shown by the display 42 according to the measurement results.

The first casing 10 has a plurality of perimetral faces or sides between the bottom face 11 and the top face 12.

To be more specific, the first casing 10 includes a bottom plate 17, a top plate 18 and a plurality of side plates 19 connecting the top plate 18 to the bottom plate 17. The first face 11 is a bottom face of the bottom plate 17 and the second face 12 is a top face of the top plate 18.

A first perimetral side 13, which for example is a distal side of the first casing 10 (i.e., the farther side relative to the user), is comprised between a first end 131 and a second end 132.

The measuring head 2 is close to the first perimetral side 13 and, to be more specific, the movement of the measuring head 2 relative to the base 1 is a sliding movement along the first perimetral side 13.

For example, the first perimetral side 13 includes a bottom wall 134, which is a portion of the bottom plate 17, a side wall 136, which is a portion of a side plate 19, and a top wall 135 which is a portion of the top plate 18. The bottom wall 134 and the top wall 135 stick out from the side wall 136.

The three walls 134, 135, 136 define a cavity 137 having an elongated shape comprised between the first end 131 and the second end 132 of the first perimetral side 13, and a substantially C-shaped section.

The first perimetral side 13 includes also a groove or track 138, which is inside the cavity 137 and is parallel to the elongated direction of the latter. Moreover, the track 138 is parallel to the movement direction 210 of the measuring head 2 relative to the base 1.

For example, the track 138 is provided on a top face of the bottom wall 134; to be more specific, the track 138 is delimited by the side wall 136 and a rib 139 projecting from the bottom wall 134.

The measuring head 2 comprises a second casing 20 having a box-like shape. A first face 21 of the second casing 20 is provided with a window 25, which for example is a hole, an aperture or a transparent portion of the second casing 20. In other words, the second casing 20 is opaque and external light can enter into the second casing 20 only through the window 25.

For example, the second casing 20 is made of opaque plastic and the window 25 is a hole provided with a lens or a protective transparent element.

For example, the window 25 is circular and it has a diameter D of 6 mm.

In the embodiment shown, the first face 21 is a bottom face of the second casing 20 and, in use, the first face 21 faces the test chart 9.

The sensor 26 is positioned inside the second casing 20 to receive light entering through the window 25. To be more specific, the sensor 26 is a spectral sensor or a spectrophotometer and is configured to measure color spectrum data of the received light.

In the embodiment shown, the spectral sensor 26 is positioned facing the window 25 and it has a respective optical axis 260 which crosses the window 25. In particular, the optical axis 260 is perpendicular to the first face 21.

The measuring head 2 comprises an illumination system for illuminating the test chart 9 with an illuminating light 271. A portion 273 of the illuminating light 271 is reflected by the test chart 9, enters into the second casing 20 through the window 25, and is received by the spectral sensor 26. When a color patch 91 is illuminated by the illuminating light 271, the spectrum of the reflected light 273 is related to the color of the patch 91.

Therefore, the color measurement apparatus 100 is suitable for reflective measuring, since the light received by the spectral sensor 26 is a portion 273 of the illuminating light 271 which is reflected by the test chart 9 along the optical axis 260. In the embodiment shown, the illumination system is positioned inside the second casing 20 and is configured to point an illuminating light 271 to the window 25. In other words, the illuminating light 271 crosses the window 25 in a first direction and the reflected light 273 crosses the window 25 in a second direction.

In particular, the illumination system comprises a plurality of illuminating devices 27. Each illuminating device 27 emits a respective illuminating light beam 272 which is at an angle A of 45 degrees with the reflected light 273, i.e. with the optical axis 260 of the spectral sensor 26. Then the illuminating light beam 272 is at an angle of 45 degrees with the first face 21 and the test chart 9 as well.

The overall illuminating light 271 is constituted by the combination of the illuminating light beams 272 of the illuminating devices 27.

A measuring technique adopting such an angle of 45 degrees for the illuminating light is known in the art.

The illuminating devices 27 are positioned inside the second casing 20 and around the window 25, i.e. on a circumference 251 centered on the window 25. The illuminating devices 27 are angularly spaced from each other according to a regular distribution. In the embodiment shown, the illumination system comprises three illuminating devices 27 positioned on said circumference 251 at an angle B of 120 degrees from each other.

Each illuminating device 27 is able to produce an illuminating light beam 272 which well approximates a standard light source denoted as D50 by the International Commission on Illumination.

For example, each illuminating device 27 comprises seven LEDs 28 different from each other. The light intensity of each LED 28 can be adjusted independently from the light intensity of the other LEDs 28.

The combination of the lights emitted by the LEDs 28 is an illuminating light beam 272 which almost perfectly replicates a D50 standard light source. US patent application US 2011/062873 gives an example of a similar LEDs combination.

The guiding rail 3 comprises a first elongated member 31, a second elongated member 32 parallel with the first elongated member 31, and two opposite side members 33, 34 connecting the first elongated member 31 to the second elongated member 32. The guiding rail 3 has a length L3.

The guiding rail 3 is mounted at the first perimetral side 13 of the first casing 10. In the embodiment shown, the guiding rail 3 is at least partially within the cavity 137 and the first elongated member 31 is mounted on the track 138 and can slide along the track 138.

Therefore, the guiding rail 3 is slidingly mounted on the base 1 and can slide along the base 1 and the first perimetral side 13 in a sliding direction 310 which is parallel to the movement direction 210 of the measuring head 2, i.e. it is parallel to the measurement path.

The guiding rail 3 can be in a first position or middle position which is centered between the first end 131 and the second end 132 of the first perimetral side 13.

In other words, in the first position a midpoint 35 between the opposite side members 33, 34 of the guiding rail 3 matches a midpoint 133 between the first end 131 and the second end 132 of the first perimetral side 13.

The guiding rail 3 can be in a second position, where the guiding rail 3 is off-centre and protrudes from one end of the first perimetral side 13, for example from the left end 131.

In other words, in the second position the midpoint 35 is closer to the left end 131 than to the right end 132 and a left section of the guiding rail 3 is outside the cavity 137, protruding from a left end of the cavity 137 more than in the first position.

The guiding rail 3 can be in a third position, where the guiding rail 3 is off-centre and protrudes from the other end of the first perimetral side 13, for example from the right end 132.

In other words, in the third position the midpoint 35 is closer to the right end 132 than to the left end 131 and a right section of the guiding rail 3 is outside the cavity 137, being protruding from a right end of the cavity 137 more than in the first position.

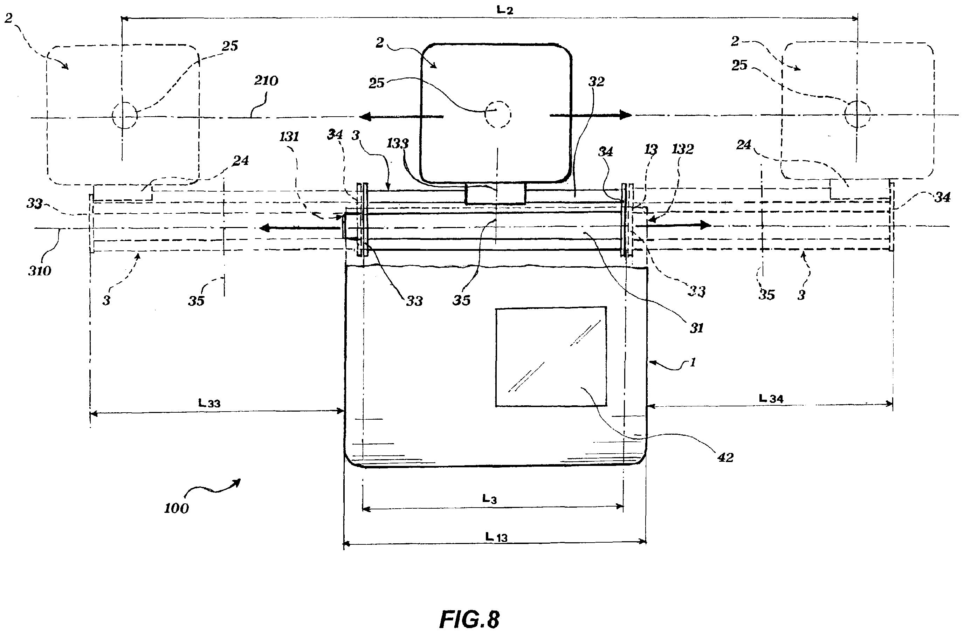

The first, second and third positions are schematically shown in Figure 8, where they are at the centre, at the left and at the right in the figure, respectively.

The first position is between the second position and the third position. Therefore, the guiding rail 3 is reversibly movable between the first position and the second position, between the first position and the third position, and also between the second position and the third position going through the first position.

In the embodiment shown, the second position and the third position are symmetrical. In other words, the left protruding section in the second position has a length L33 which equals the length L34 of the right protruding section in the third position.

For example, the protruding section in the second position and/or in the third position has a respective length L33, L34 which is more than half of the length L3 of the guiding rail 3. For example, the length L3 of the guiding rail 3 is 20 cm and the protruding sections in the second position and in the third position have respective lengths L33, L34 of 15 cm.

In the embodiment shown, the length L3 of the guiding rail 3 is lower than, or equals, a length L13 of the first perimetral side 13, the length L13 being measured between the first end 131 and the second end 132.

Therefore, when the guiding rail 3 is in the first position, the guiding rail 3 is fully arranged between the first end 131 and the second end 132 of the first perimetral side 13, i.e. it is comprised between the ends 131, 132 of the first perimetral side 13. In other words, in the first position the guiding rail 3 is entirely within the cavity 137 and no section protrudes from any end 131, 132.

For example, the length L13 of the first perimetral side 13 is 20 cm.

Stop elements (not shown) are provided to prevent the guiding rail 3 from going beyond the second position and/or the third position. In other words, the stop elements are end-of-stroke stoppers which prevent the guiding rail 3 from going completely outside the cavity 137. This is useful for avoiding any unintentional disengagement between the base 1 and the guiding rail 3.

The measuring head 2 is mounted on the guiding rail 3 and can slide along the guiding rail 3. To be more specific, the measuring head 2 includes a slide 24 projecting from a bottom region of a side wall 23 of the second casing 20. The slide 24 is mounted on the second elongated member 32 of the guiding rail 3 and can slide along the second elongated member 32 between the two opposite side members 33, 34. The side members 33, 34 serve as end-of-stroke stoppers for the slide 24 and the measuring head 2.

The slide 24 serves also as a spacer for the second casing 20, so that the second casing 20 is outside the cavity 137 and the second casing 20 is close to the edge of the top plate 18 at the first perimetral side 13.

Therefore, the measuring head 2 is slidingly mounted on the guiding rail 3 and can slide along the guiding rail 3 in a sliding direction which is its movement direction 210, i.e. along the measurement path.

Summarizing, the measuring head 2 can slide along the guiding rail 3 in a first sliding direction 210 and the guiding rail 3 can slide along the base 1 in a second sliding direction 310. The first sliding direction 210 and the second sliding direction 310 are parallel to each other, because the first elongated member 31 and the second elongated member 32 of the guiding rail 3 are parallel to each other.

The movement of the measuring head 2 relative to the base 1 is then a combined movement including a sliding movement of the measuring head 2 relative to the guiding rail 3 and a sliding movement of the guiding rail 3 relative to the base 1.

Considering a whole measurement run, the measuring head 2 is movable between a full-left position, in which the guiding rail 3 is in the left-protruding second position and the slide 24 is against the left side member 33, and a full-right position, in which the guiding rail 3 is in the right-protruding third position and the slide 24 is against the right side member 34.

For example, if the length L13 of the first perimetral side 13 is 20 cm and the length L3 of the guiding rail 3 is 20 cm, the overall length L2 of the measuring head run between full-left position and full-right position may be 45 cm.

The measuring head 2 is electrically connected to the base 1 by an electric cable or wire 48 or by a bundle of cables.

A first end of the cable 48 is connected to the base 1 and a second end of the cable 48 is connected to the measuring head 2. In order to avoid obstructions or damages to the cable 48 during the movement of the measuring head 2, an intermediate portion of the cable 48 is around a return pulley 49 which is pivoted to a side member 33 of the guiding rail 3. Therefore, during the movement of the measuring head 2, the cable 48 is kept uncurled as much as possible and few curls or loops should form.

For example, the cable 48 is connected to the internal battery 44 for supplying electric power to the spectral sensor 26 and the illuminating devices 27. Moreover, the data measured by the spectral sensor 26 are transmitted to the processing unit 40 via the cable 48 or another cable of the bundle.

In other embodiments, the measuring head 2 is provided with an internal battery and/or a data transmission to the base 1 is carried out via a wireless communication. In this cases, a cable 48 connecting the measuring head 2 to the base 1 may be avoided.

The color measurement apparatus 100 may comprise a temperature sensor and/or a humidity sensor to measure temperature and/or humidity of the surrounding environment. In fact, the measured spectral data can be influenced by the local conditions at which the measurements are carried out. Preferably, these temperature and/or humidity sensors are located within the base 1.

The color measurement apparatus 100 may comprise a distance-measuring device for measuring a displacement or a movement of the measuring head 2 relative to the base 1 and to the test chart 9. For example, a pivoted wheel protrudes from the first face 21 of the second casing 20, so that the pivoted wheel rotates when the measuring head 2 is moved along the test chart 9. The pivoted wheel is connected to a transducer or an encoder which calculates the length of the movement from the angular displacement of the pivoted wheel. This is useful for determining the position of the measuring head 2 on the test chart 9 and then which color patch 91 is being measured.

In one embodiment, the color measurement apparatus 100 may comprise a sensing device to sense or detect the position of the measuring head 2 relative to the base 1. In other words, the sensing device is configured to sense the relative position of the measuring head 2 and to detect when the measuring head 2 is moved. For example, the sensing device includes a first member sensing the position of the guiding rail 3 relative to the base 1, and a second member sensing the position of the measuring head 2 relative to the guiding rail 3. The position of the measuring head 2 relative to the base 1 is obtained by the combination of the outputs of the first and second sensing members. Optical, mechanical or electronic systems can be used to implement such a sensing device. The sensing device is useful also for determining the position of the measuring head 2 on the test chart 9 and then which color patch 91 is being measured.

The measuring head 2 may comprise one or more laser pointer(s) 52 positioned on side face(s) of the second casing 20 to indicate the measurement path direction 210. For example, the measuring head 2 comprises two laser pointers 52 positioned at opposite external side faces 22a, 22b of the second casing 20. Each laser pointer 52 is configured to emit a respective laser beam 520 in the direction 210 along which the measuring head 2 is moved during a measurement run.

This is useful for assuring that the measurement direction 210, which is aligned with the window 25, is along a row 94 of consecutive color patches 91 to be measured. The two laser pointers 52 emit beams 520 from opposite sides 22a, 22b, because the measuring head 2 can be moved in both ways. The two beams 520 are aligned with each other and with the window 25. Therefore, the laser pointers 52 indicate where measurements will be carried out.

The measuring head 2 may comprise one or more reference tongue(s) 54 protruding from side face(s) of the second casing 20 to center the window 25 on the color patches 91. For example, the measuring head 2 comprises two reference tongues 54 positioned at the opposite external side faces 22a, 22b of the second casing 20. The two reference tongues 54 are aligned with each other and also with the window 25, i.e. they are aligned with the measurement direction 210. Each tongue 54 is spike-shaped.

In use, the measuring head 2 is positioned so that the reference tongues 54 and/or the laser beams 520 are aligned with the center-line of a row 94 of consecutive color patches 91 to be measured. This is useful for assuring that the measurement direction 210 is centered relative to the row 94 of patches 91 and that an erroneous measuring of patches 91 of adjacent rows is prevented.

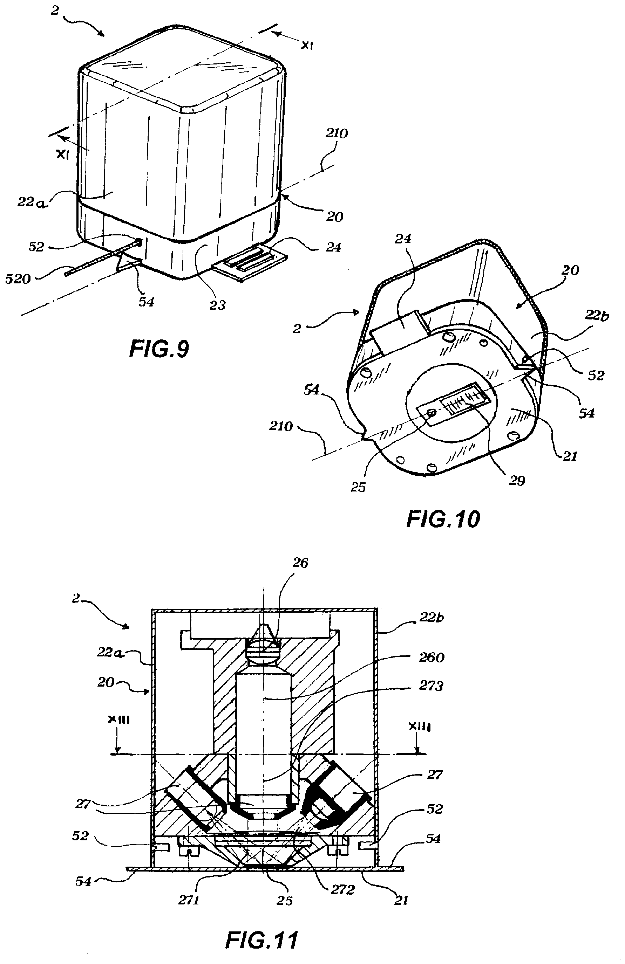

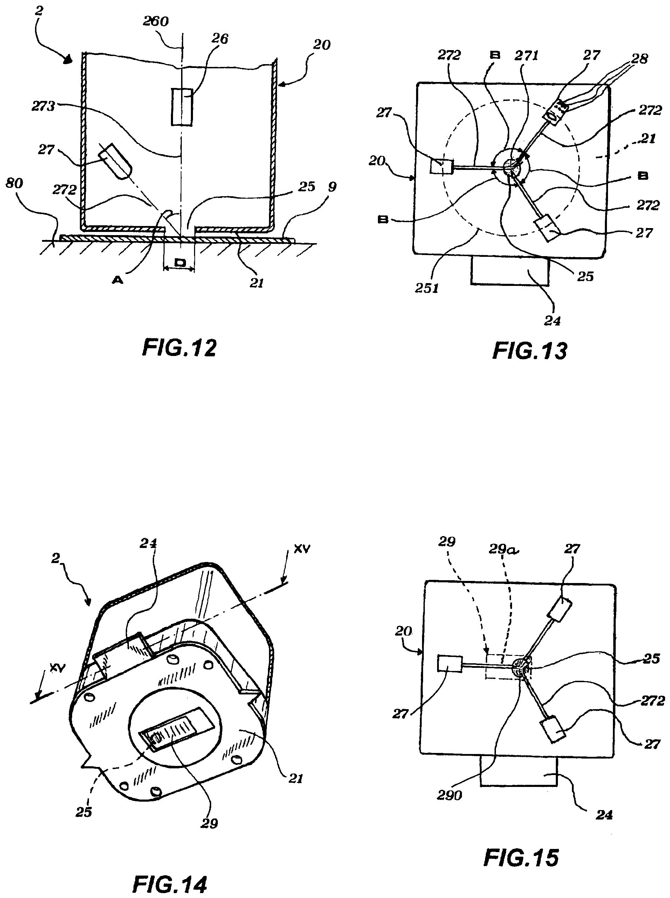

The measuring head 2 may comprise a shutting member 29 for the window 25. The shutting member 29 is movable between a first condition (Figure 10), in which the window 25 is open and light 273 can enter into the second casing 20, and a second condition (Figures 14 and 15), in which the window 25 is shut by the shutting member 29.

When the shutting member 29 is in the second condition, the shutting member 29 is useful for preventing dust or dirt from going inside the second casing 20 when the color measurement apparatus 100 is not in use.

Moreover, an internal side 29a of the shutting member 29 is provided with a calibration reference target 290, which for example is a portion with a reference white color. When the shutting member 29 is in the second condition, the calibration reference target 290 is at the window 25, i.e. it faces the spectral sensor 26.

This is useful for calibrating the spectral sensor 26. For example, a first calibration measurement is carried out when the shutting member 29 is in the second condition and the illumination system is off. In this case, a total darkness condition is met inside the second casing 20 and the data measured by the spectral sensor 26 are referred to full black. A second calibration measurement is carried out when the shutting member 29 is in the second condition and the illumination system is on. In this case, the calibration reference target 290 is measured by the spectral sensor 26; for example, data for reference white are obtained.

Therefore, the data obtained for full black and reference white are compared with the expected reference values and the spectral sensor 26 can be calibrated accordingly.

The color measurement apparatus 100 comprises also directing means for directing a translational movement of the color measurement apparatus 100 along a translation direction 110 which is perpendicular to the movement direction 210 of the measuring head 2, i.e. it is perpendicular to the measurement path.

To be more specific, the directing means is mounted on the base 1 and includes at least one wheel or roller 51 protruding from the bottom face 11 of the first casing 10, i.e. from the bottom plate 17 thereof.

The at least one wheel or roller 51 has a pivot 53 which is perpendicular to the translation direction 110. In other words, the at least one wheel or roller 51 is rotatable about a rotation axis 510 which is perpendicular to the translation direction 110 and parallel to the movement direction 210, i.e. to the measurement path.

In the embodiment shown, the directing means comprises two identical rollers 51a, 51b which are spaced-apart from each other and are mounted on a common pivot or shaft 53.

The two rollers 51a, 51b are positioned close to a second perimetral side 14 which is opposite to the first perimetral side 13. The distance between the two rollers 51a, 51b almost equals the length of the second perimetral side 14. Moreover, the two rollers 51a, 51b are fastened at opposite ends of the common pivot 53 (which is a shaft or rod), so the rollers 51a, 51b and the pivot 53 are configured to rotate jointly. Therefore, the two rollers 51a, 51b are compelled to rotate at a same angular velocity about the rotation axis 510, which is the axis of the common pivot 53.

The pivot 53 is inside the first casing 10 and is pivoted at seats 55 provided on a top face of the bottom plate 17. The rollers 51a, 51b are partially inserted into respective slots 57 made in the bottom plate 17, so that the rollers 51a, 51b outwardly protrude from the bottom face 11 of the first casing 10.

Since the rollers 51a, 51b rotate with a same velocity about a same rotation axis 510 and any slipping of the rollers 51a, 51b on the support table 80 is prevented by their friction against the support table 80 itself, only a translation of the color measurement apparatus 100 along the translation direction 110 is allowed by the directing means.

A frictional element 59 is positioned on the bottom face 11 of the first casing 10. To be more specific, the frictional element 59 is close to the first perimetral side 13, i.e. it is at the same side of the measuring head 2 and at the opposite side of the rollers 51a, 51b. For example, the frictional element 59 is a rubber strip which is glued to the bottom plate 17.

The frictional element 59 is configured to contrast any movement of the base 1 during a measurement run, thanks to friction between the frictional element 59 and the support table 80. This contrasting action is exerted while the frictional element 59 touches the support table 80, then blocking the movements of the base 1 by creating a static friction force that is greater than a force acting on the base 1 during an ordinary use of the color measurement apparatus 100.

In particular, the frictional element 59 blocks the movements of the base 1 along the translation direction 110 and along the movement direction 210 of the measuring head 2.

Therefore, the frictional element 59 is useful for keeping the base 1 motionless during a measurement run.

The bottom face 11 of the first casing 10 is provided also with at least one bulge 56 which is positioned between the frictional element 59 and the rollers 51a, 51b. To be more specific, the bulge 56 protrudes from a region of the bottom face 11 which is interposed between the frictional element 59 and the rotation axis 510 of the rollers 51a, 51b. That is, the bulge 56 is a spacer that set a distance between the bottom face 11 and the support table 80.

Basically, the bulge 56 is a protuberance or projection which protrudes down from a hypothetical resting plane touching the frictional element 59 and the rollers 51a, 51b.

Therefore, the bulge 56 is a pivot or fulcrum for a rocking movement of the bottom face 11 (and then of the whole base 1) around a fulcrum axis 560 defined by the bulge 56.

In other words, when the base 1 is positioned on a support table 80 and the bottom face 11 faces the support table 80, the bulge 56 prevents the frictional element 59 and the rollers 51a, 51b from simultaneously touching the support table 80.

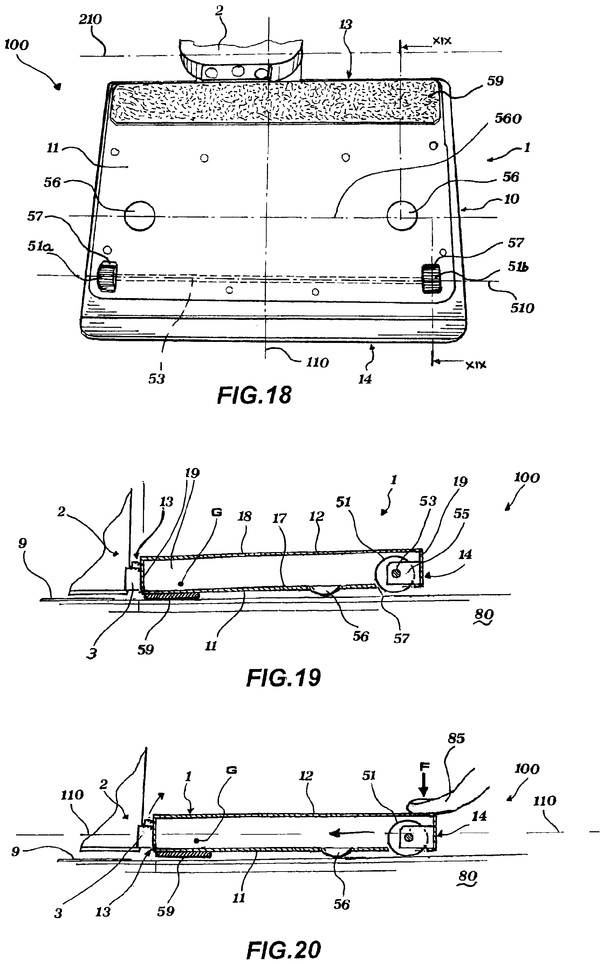

Thus, the base 1 can rock or swing between a first position, in which the frictional element 59 and the bulge 56 touch the support table 80 and the rollers 51a, 51b are raised from the support table 80 (Figure 19), and a second position, in which the rollers 51a, 51b and the bulge 56 touch the support table 80 and the frictional element 59 is raised from the support table 80 (Figure 20).

In the first position, the movements of the base 1 are prevented by the frictional element 59 and then a measurement run can be carried out by moving the measuring head 2 only. In the second position, the color measurement apparatus 100 can move along the translation direction 110 without any contrasting action from the frictional element 59, because the latter does not touch the support table 80.

In the embodiment shown, two bulges 56 are provided, each of them being button-shaped. The bulges 56 are aligned with each other along a fulcrum axis 560 which is parallel to the rotation axis 510 of the rollers 51a, 51b and to the movement direction 210 of the measuring head 2.

The bulges 56 are made of a material with a low frictional coefficient, so that the color measurement apparatus 100 in the second position can be easily moved without being hampered by friction of the bulges 56 on the support table 80.

Moreover, the bulges 56 are positioned between the centre of gravity G of the color measurement apparatus 100 and the rotation axis 510 of the rollers 51a, 51b. For example, the position of the centre of gravity G is mainly due to weight of the measuring head 2 and the guiding rail 3.

Therefore, due to the position of the center of gravity G relative to the bulges 56, the base 1 is biased towards the first position. In other words, when the color measurement apparatus 100 is in a rest condition, the frictional element 59 touches the support table 80 and any movement of the base 1 is contrasted by friction. When a translation movement of the color measurement apparatus 100 along the translation direction 110 is required, a user should exert a downward force F in the region of the second perimetral side 14 of the first casing 10 to put and keep the base 1 in the second position.

The color measurement apparatus 100 is useful for carrying out measurements on a test chart 9 which is kept stationary relative to the base 1 during a measurement run.

When carrying out a measurement, the color measurement apparatus 100 and the test chart 9 are positioned on a support table 80. To be more specific, the first face 21 of the measuring head 2 is above the test chart 9 and faces the color patches 91. The first face 21 may touch the test chart 9 and rest on it, or the first face 21 may be slightly raised from the test chart 9.

If a first long color patch row 94 is to be measured, the measuring head 2 and the guiding rail 3 are initially moved to the full-left position, so that the window 25 is at the left of the first color patch 91 of the first row 94.

Thanks to the laser pointers 52 and the reference tongues 54, the alignment of the window 25 and the measurement direction 210 with the first row 94 and its center-line is checked and adjusted.

The measuring head 2 is moved by hand 85 from the full-left position to the full-right position; the base 1 is in the first position, where it is kept motionless by the frictional element 59 touching the support table 80.

A plurality of measurement regions are measured during this movement of the measuring head 2, i.e. during a measurement run. In particular, all the color patches 91 of the first row 94 are measured.

For example, the spectral sensor 26 has a sampling rate of 200 Hz, therefore data are obtained for 200 measurement regions each second while the measuring head 2 is moved relative to the test chart 9 during a measurement run.

It should be considered that the window 25 is smaller than the color patch 91 (for example, the window 25 has a diameter D of 6 mm and the color patch 91 is a square having a side length of 1 cm), therefore many measurement regions can be measured for a same color patch 91.

For each measurement, the illumination system creates an illuminating light 271 that goes out through the window 25 and illuminates the measurement region of the color patch 91. The color patch 91 reflects the illuminating light 271; a reflected portion 273 of the illuminating light 271 enters into the second casing 20 through the window 25 along a direction which is the optical axis 260 of the spectral sensor 26. Therefore, the reflected light portion 273, whose spectrum is related to the color of the patch 91, is received by the spectral sensor 26, which measures the color spectrum and obtains data which are representative of the color of the respective measurement region of the patch 91.

The color spectrum data are transmitted to the processing unit 40.

Each measurement region can be related with a respective color patch 91, then the color spectrum data can be compared with expected values for the same color patch 91.

For example, a distance-measuring device gives the distance of the measuring head 2 from a starting point. The color patch 91 to which the measurement region is referred can be determined from the distance and the known side length of the patches 91.

Alternatively, a sharp variation of the color spectrum data between consecutive measurement regions is processed as an indication of a transition from a color patch 91 to an adjacent color patch 91. Therefore, knowing the color patch sequence, each measurement region can be associated with the respective color patch 91.

In order to measure a second row 94, the user presses downward the proximal region of the first casing 10 (i.e., the region of the second perimetral side 14) with a hand 85 to put the base 1 in the second position, wherein the rollers 51a, 51b touch the support table 80 and the frictional element 59 is raised.

Keeping such a pressure, the user pushes forward the color measurement apparatus 100, until the laser pointers 52 and the reference tongues 54 are aligned with the second row 94.

Thanks to the rollers 51a, 51b acting as directing means, the forward movement is along the translation direction 110, which is perpendicular to the rows 94.

The user's pressure on the proximal region 14 is released, so that the base 1 goes back to the first position, and a second measurement run is carried out along the second row 94 by moving the measuring head 2 from the full-right position to the full-left position.

Therefore, also the second row 94 is measured.

The steps above are repeated until all the rows 94 have been measured.

It is evident that several modifications are possible. For example, the measurement runs may be carried out always from full-left position to full-right position, or always from full-right position to full-left position. For example, the translational movement to move the color measurement apparatus 100 to a following row 94 may be carried out after having put the measuring head 2 in a central position between full-left position and full-right position.

Moreover, single measurements of spot-colors, i.e. measurements carried out in specific points without effecting a whole measurement run, are possible.

In a calibration phase or in an initial measurement phase, the spectral sensor 26 may be used also to measure an ambient light, for example by directing the first face 21 and the window 25 toward a ceiling or a light source in a measurement room. This is useful for having data about the ambient light under which the test chart 9 (and also the final printed product) is watched, because the ambient light can be different from a D50 standard light.

In one embodiment, the light intensity of each LED 28 can be adjusted so that the combination of the lights emitted by the LEDs 28 is an illuminating light beam 272 which replicates the measured ambient light. In other words, the illumination system of the measuring head 2 is able to simulate or reproduce the ambient light, which is used during the measurements instead of a D50 standard light.

This is useful for carrying out the measurements under the same actual light conditions under which the test chart 9 and the final printed product are watched by an operator, a color technician or a customer.

For example, the adjustment of the light intensity of each LED 28 in order to reproduce such an ambient light is automatically performed by the processing unit 40, the processing unit 40 being configured to process the measured ambient light and to accordingly set the LEDs 28 for reproducing the measured light.

In one embodiment, the light 273 received by the spectral sensor 26 is a portion of a light transmitted through the test chart 9, which for example is a film. In other words, the color measurement apparatus 100 is suitable for transmissive measuring as well. In such an embodiment, the illumination system is not a part of the measuring head 2, or the illumination system is positioned outside the second casing 20 and/or the window 25 is positioned between the illumination system and the spectral sensor 26, so that in use the test chart film is housed between the illumination system and the window 25.

The processing unit 40 processes and elaborates the received data, in particular for calibration purposes of a printer and/or for determining a print quality.

For example, a deviation between the color spectrum data and reference values for a same color patch 91 is calculated. The extent of such a deviation is related to the ability of the printer in reproducing the test color of the patch 91 as desired, i.e. with a desired print quality. The printer settings are iteratively changed and adjusted until a desired print quality is met.

The processing unit 40 may be an internal computer of the base 1.

The color measurement apparatus 100 may comprise an internal data storage to save measured color spectrum data.

The measurements can be carried out according to an on-line mode, wherein the color measurement apparatus 100 is connected to an external computer, or to an off-line mode, wherein the color measurement apparatus 100 is disconnected from an external computer.

The obtained data can be transferred to an external computer via a cable or a wire, a USB port, a serial port, or a wireless (wi-fi, bluetooth,...) communication. A synchronization software for synchronizing the obtained data with data already stored in a computer may be included.

The color measurement apparatus 100 may be powered by the internal battery 44 or by an external power supply.

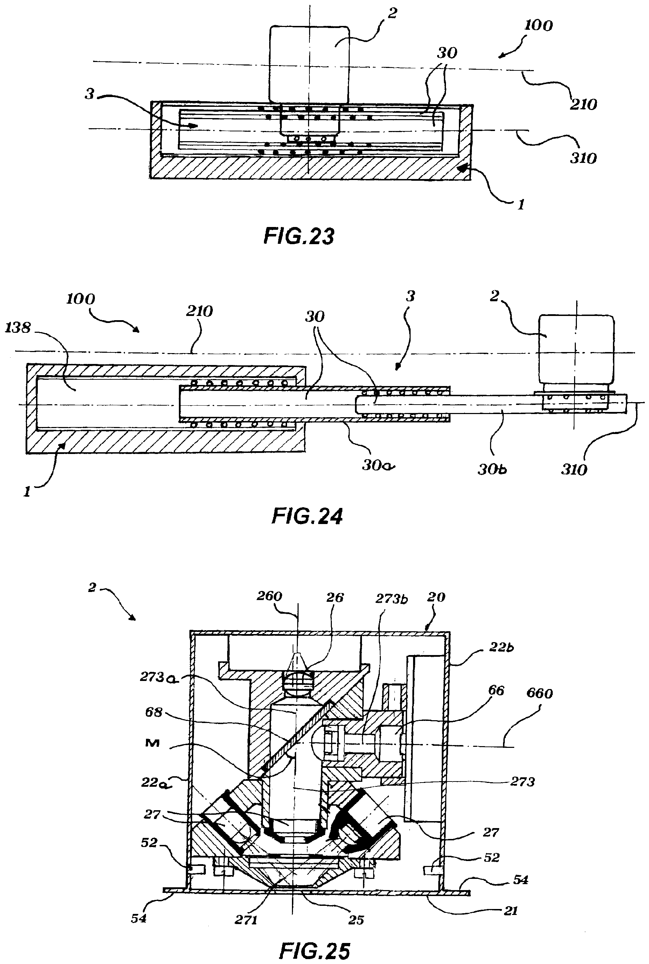

In another embodiment, a detail of which is schematically shown in Figures 23 and 24, the guiding rail 3 is a telescopic rail comprising a plurality of elongated members 30 which can slide the one relative to the other along directions 310 parallel with the movement direction 210 of the measuring head 2. In other words, the guiding rail 3 includes a series of elongated members 30, 30a, 30b which can mutually slide; a first member 30a of the series is slidingly mounted on the base 1 and the measuring head 2 is slidingly mounted on a last member 30b of the series.

Therefore, the measuring head 2 can slide along the guiding rail 3 and the guiding rail 3 can slide along the base 1. In this embodiment, the overall length of the guiding rail 3 in a fully extended condition (Figure 24) is much longer than the length of the guiding rail 3 in a contracted condition (Figure 23). Thus, the ratio between the overall length L2 of the measuring head run and the length L13 of the first perimetral side 13 can be larger than the ratio in the embodiment of Figures 3 to 22. In other embodiments of a color measurement apparatus 100 according to the present disclosure, shown in Figures 25 to 28, the measuring head 2 further comprises a camera 66 to take an image of the test chart 9; in particular the image represents a portion of a color patch 91. The color measurement apparatus 100 is configured to take the image through the camera 66 together with measuring the color spectrum data through the spectral sensor 26.

To be more specific, the camera 66 is a digital camera and the image is a digital image that can be processed by an electronic processing unit 40.

The digital camera 66 is positioned within the second casing 20 of the measuring head 2, so that the digital camera 66 is movable together with the spectral sensor 26 without changing their mutual spatial relation. This means that data measured by the spectral sensor 26 can be related with an image which is simultaneously taken by the digital camera 66.

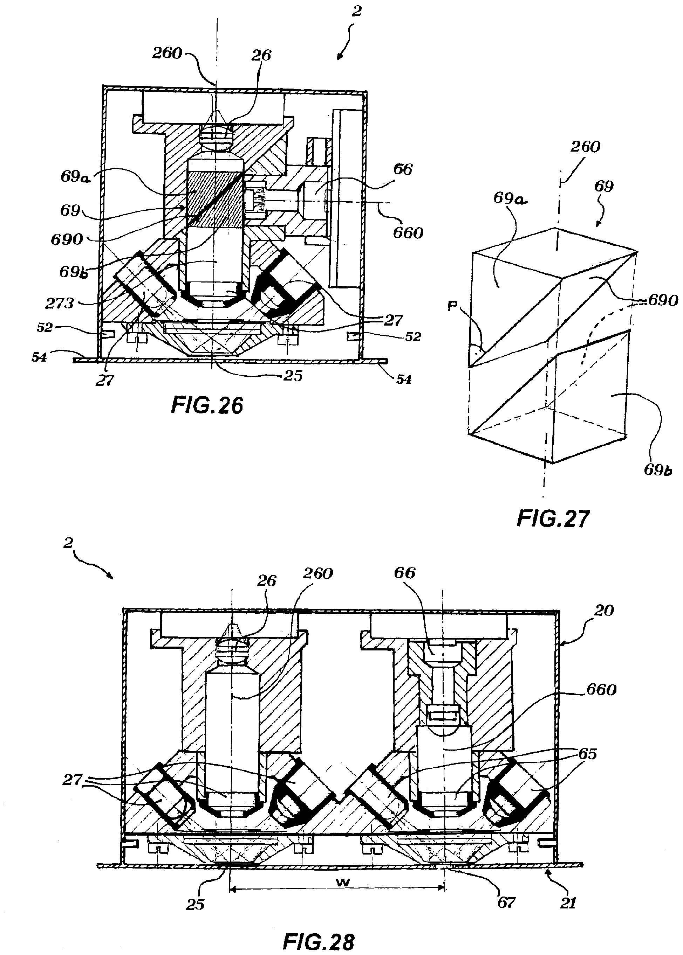

In the embodiments shown in Figures 25 and 26, the digital camera 66 is configured to receive an image of the test chart 9 through the window 25, i.e. the image is associated with the reflected light 273 which is received through the window 25. The measuring head 2 comprises also an optical device which is able to split up the reflected light 273 between the spectral sensor 26 and the digital camera 66.

To be more specific, the digital camera 66 has a respective optical axis 660. The reflected light 273 received through the window 25 is split up into a first light portion 273a and a second light portion 273b. The first light portion 273a has a direction along a first optical axis coinciding with the optical axis 260 of the spectral sensor 26; the second light portion 273b has a direction along a second optical axis coinciding with the optical axis 660 of the digital camera 66.

The first optical axis 260 crosses the window 25 and is aligned with the direction of the reflected light 273, i.e. the spectral sensor 26 is oriented perpendicular to the window 25, whereas the digital camera 66 is positioned at a side between the window 25 and the spectral sensor 26, i.e. at a side of the reflected light direction. For example, the second optical axis 660 is perpendicular to the first optical axis 260.

In the embodiment shown in Figure 25, the splitting optical device is a semi-transparent mirror 68 which reflects only a part 273b of the incident light 273, whereas the remaining part 273a of the incident light 273 is transmitted through the semi-transparent mirror 68. Semi-transparent mirrors are already known *per se.* The semi-transparent mirror 68 is positioned between the window 25 and the spectral sensor 26, and faces the digital camera 66. The semi-transparent mirror 68 is at an angle M of 45 degrees with the direction of the incident light 273, so that the transmitted light part 273a is perpendicular to the reflected light part 273b.

In the embodiment shown in Figure 26, the splitting optical device is a beamsplitter prism 69. As shown in the exploded view of Figure 27, the beamsplitter prism 69 is divided into two parts 69a, 69b, each of them having a slanted planar surface 690 fitting perfectly to the slanted planar surface 690 of the other part. At least one of the slanted planar surfaces 690 is semi-reflective, i.e. it reflects a part 273b of the incident light 273 and transmits the remaining part 273a of the incident light 273. Therefore, only a part 273a of the incident light 273 is transmitted through the beamsplitter prism 69, whereas the remaining part 273b of the incident light 273 is reflected by the slanted surfaces 690.

The beamsplitter prism 69 is positioned between the window 25 and the spectral sensor 26, and faces the digital camera 66. The slanted surfaces 690 of the beamsplitter prism 69 are at an angle P of 45 degrees with the direction of the incident light 273, so that the transmitted light part 273a is perpendicular to the reflected light part 273b.

The beamsplitter prism 69 is useful for keeping the transmitted light 273a aligned with the incident light 273. In fact, the beamsplitter prism 69 is useful for avoiding a slight misalignment between transmitted light 273a and incident light 273 which, for a semi-transparent mirror 68, is caused by refraction through the thickness of the mirror 68.

It is evident that the positions of the spectral sensor 26 and the digital camera 66 may be reverse, i.e. the spectral sensor 26 may receive the reflected light part 273b and the digital camera 66 may receive the transmitted light part 273a.

In an alternative embodiment, the digital camera 66 may be inside a third casing mounted on the second casing 20 or connected to the latter by a connection member, so as to be movable together as a single body. The second casing 20 and the third casing are in optical communication with each other, so the second light portion 273b reaches the digital camera 66. Also in this case, the positions of the spectral sensor 26 and the digital camera 66 may be reverse.

The digital camera 66 can be a black-and-white camera or a color camera.

The resolution of the digital camera 66 is sufficient for recognizing the print patterns 93 on the printed item 9, i.e. the patterns followed by each printing element of the printer which printed the test chart 9.

The digital camera 66 has, for example, a resolution of 300 dots-per-inch (DPI) or greater. This resolution value is referred to the measurement region of the test chart 9 which is recorded in use; in other words, the pixel number of the digital camera 66 (for example, 2 Megapixel) required to obtain such a resolution depends also on the length of the optical path and on the features of any lens or similar optical device between the window 25 and the digital camera 66.

If the digital camera 66 is a color camera, the resolution is sufficient for discriminating between primary color print patterns 93, i.e. for recognizing each pattern 93 of the different color printing elements of the printer.

During a measurement, the reflected light portion 273 is split between the optical axis 260 of the spectral sensor 26 and the optical axis 660 of the digital camera 66.

The spectral sensor 26 measures the color spectrum and obtains data which are representative of the color of the measurement region of the patch 91. At the same time, the digital camera 66 takes an image of the measurement region of the patch 91.

The images are processed by the processing unit 40 or by an external computer.

For example, several images pertaining to a same color patch 91 are compared with each other or with a reference image in order to detect defects which are below the sensitivity of the spectral sensor 26.

In fact, due to the greater resolution of the digital camera 66, each image allows to examine small portions of the color patch 91. Each of these small portions is much smaller than the size of the window 25 and of the measurement region; for example each small portion has a size of few hundredths of millimeter, depending on the resolution of the digital camera 66.

Therefore, thanks to the digital camera 66 it is possible to find out defects that cannot be discovered by the spectral sensor 26.

For example, it is possible to identify the actual print pattern 93 produced by each printing element of a printhead. The comparison between the actual print pattern 93 and the expected print pattern is useful for checking if the printing element works correctly and/or if the printing elements are properly aligned with each other. These types of check are possible even if the digital camera 66 is a black-and-white camera.

If the digital camera 66 is a color camera, the print patterns 93 of the color printing elements can be recognized, i.e. primary color print patterns 93 in a same colored region can be discriminated from each other.

Moreover, the digital camera 66 allows to measure an "image quality" of a printed item and to provide measured values of parameters that are prescribed by image quality regulations in the technical field; for example, the parameters include color uniformity, drop width, drop overlap, etc.

The processing unit 40 or the external computer is configured to recognize the primary color print patterns 93 in the image and to check if each print pattern 93 matches the expected pattern for the same color and/or if the color print patterns 93 are properly overlapping each other.

Therefore, a print quality can be established from the deviations between actual spectral data / images and the reference expected value / images. The printer settings are iteratively changed and adjusted until a desired print quality is met.

The camera 66 can also be useful for checking if the window 25 is centered relative to a desired measurement region, for example if the window 25 is at the center of a color patch 91 to be measured.

The camera 66 can also be useful for reading a code at the beginning of a row 94; for example the code is a line indicator or a code giving information about the color patches 91 in the respective row 94.

In an alternative embodiment shown in Figure 28, a second window 67 is provided on the first face 21 of the second casing 20 or of a third casing fastened to the second casing 20. The second window 67 is spaced-apart from the first window 25, i.e. the second window 67 is at a distance W from the first window 25. The second window 67 is similar to the first window 25 and is configured to receive light reflected by the test chart 9. In this embodiment the digital camera 66 receives an image of the test chart 9 through the second window 67; in other words, the recorded image is associated with a light received through the second window 67.

For example, the digital camera 66 is positioned to face the second window 67; its optical axis 660 crosses the second window 67 and is aligned with the direction of the respective reflected light. To be more specific, the optical axis 660 of the digital camera 66 is perpendicular to the first face 21, i.e. the digital camera 66 is oriented perpendicular to the second window 67.

The illumination system is configured to point an illuminating light also to the second window 67. For example, additional illuminating devices 65 are positioned around the second window 67 likewise for the first window 25.

In this embodiment the data measured by the spectral sensor 26 and the image simultaneously recorded by the digital camera 66 are not pertinent to a same measurement region of the test chart 9 as for the previous embodiments; in fact, the data and the simultaneous image are pertinent to two different measurement regions of the test chart 9, the two measurement regions having a fixed distance W from each other. Since the distance W is preset by the structure of the measuring head 2, the relative positions of the two measurement regions are known and the position of one region (for example, the region recorded by the digital camera 66) can be calculated from the position of the other region (for example, the region measured by the spectral sensor 26).

## Claims

1. A color measurement apparatus (100) for measuring a color on a printed item (9), comprising:
- a first body (1);
- a second body (2) including a sensor (26) for measuring color data of a printed item (9), the second body (2) being movable relative to the first body (1) along a measurement direction (210);
- a guiding rail (3) for guiding the movement of the second body (2) relative to the first body (1), the guiding rail (3) being positioned between the first body (1) and the second body (2),
wherein the second body (2) is slidingly mounted on the guiding rail (3) and can slide along the guiding rail (3) in a first sliding direction (210),
and wherein the guiding rail (3) is slidingly mounted on the first body (1) and can slide along the first body (1) in a second sliding direction (310) parallel to the first sliding direction (210),
whereby the movement of the second body (2) relative to the first body (1) is a combined movement including a sliding movement of the second body (2) relative to the guiding rail (3) and a sliding movement of the guiding rail (3) relative to the first body (1); and
wherein the color measurement apparatus (100) comprises directing means (51, 51a, 51b) for directing a translational movement of the color measurement apparatus (100) along a translation direction (110) which is perpendicular to the measurement direction (210); and
wherein the first body (1) includes a first casing (10) having a bottom face (11), the directing means comprising at least one wheel or roller (51, 51a, 51b), said wheel or roller (51, 51a, 51b) protruding from the bottom face (11) and having a pivot (53) perpendicular to the translation direction (110).

2. The color measurement apparatus (100) according to claim 1, wherein the first body (1) includes a first casing (10) having a first perimetral side (13), the guiding rail (3) being mounted at said first perimetral side (13), wherein the guiding rail (3) can slide along the first perimetral side (13).

3. The color measurement apparatus (100) according to claim 2, wherein the first perimetral side (13) is comprised between a first end (131) and a second end (132), the guiding rail (3) being movable between a first position and a second position, wherein the guiding rail (3) in the first position is at a middle position centered between the first end (131) and the second end (132), and the guiding rail (3) in the second position is off-centre and protrudes from one (131) of said first end (131) and second end (132).

4. The color measurement apparatus (100) according to claim 3, wherein the guiding rail (3) is further movable between the first position and a third position, wherein the guiding rail (3) in the third position is off-centre and protrudes from the other one (132) of said first end (131) and second end (132), the first position being between the second position and the third position.

5. The color measurement apparatus (100) according to claim 3 or 4, wherein the guiding rail (3) has a length (L3) and, in the second position and/or in the third position, a length (L33, L34) of a guiding rail section protruding from the respective first end (131) or second end (132) is more than half of the length (L3) of the guiding rail (3).

6. The color measurement apparatus (100) according to any one of claims 3 to 5, wherein the first perimetral side (13) has a length (L13) comprised between the first end (131) and the second end (132), and the guiding rail (3) has a length (L3) lower than the length (L13) of the first perimetral side (13), whereby the guiding rail (3) in the first position is fully arranged between the first end (131) and the second end (132).

7. The color measurement apparatus (100) according to anyone of the previous claims, wherein the directing means comprises two of said wheels or rollers (51a, 51b), the two wheels or rollers (51a, 51b) being spaced-apart and being mounted on a common pivot (53), whereby the two wheels or rollers (51a, 51b) are configured to rotate jointly.

8. The color measurement apparatus (100) according to any one of the previous claims from claim 2 to claim 7, wherein the first casing (10) has a second perimetral side (14), the first perimetral side (13) and the second perimetral side (14) being opposite sides of the first casing (10), said wheel or roller (51, 51a, 51b) being close to the second perimetral side (14).

9. The color measurement apparatus (100) according to claim 8, comprising a frictional element (59) positioned at the bottom face (11) and close to the first perimetral side (13), wherein, in use, the first body (1) rests on a support table (80), the bottom face (11) facing the support table (80), and the frictional element (59) is configured to contrast any movement of the first body (1) on the support table (80) by creating a friction between the frictional element (59) and the support table (80).

10. The color measurement apparatus (100) according to claim 9, wherein the bottom face (11) comprises at least one bulge (56) positioned between the frictional element (59) and the wheel or roller (51, 51a, 51b), the bulge (56) being a protrusion such that, when the first body (1) rests on the support table (80), the frictional element (59) and the wheel or roller (51, 51a, 51b) are prevented from simultaneously touching the support table (80).

11. The color measurement apparatus (100) according to claim 10, wherein the bulge (56) is positioned between a centre of gravity (M) of the color measurement apparatus (100) and the wheel or roller (51, 51a, 51b).

12. The color measurement apparatus (100) according to any one of the previous claims, wherein the first body (1) includes a processing unit (40) and a display (42).

13. The color measurement apparatus (100) according to any one of the previous claims, wherein the second body (2) comprises at least one laser pointer (52) configured to emit a beam (520) aligned with the measurement direction (210).

14. The color measurement apparatus (100) according to any one of the previous claims, wherein the second body (2) comprises a second casing (20) and at least one reference tongue (54), the at least one reference tongue (54) protruding from the second casing (20) along the measurement direction (210).

15. The color measurement apparatus (100) according to claim 13 or 14, wherein the second body (2) comprises a second casing (20) and two laser pointers (52) and/or two reference tongues (54), the two laser pointers (52) and/or two reference tongues (54) being positioned at opposite side faces (22a, 22b) of the second casing (20).

16. The color measurement apparatus (100) according to any one of the previous claims, wherein the second body (2) includes a camera (66) configured to take an image of the printed item (9).

17. The color measurement apparatus (100) according to any one of the previous claims, wherein the second body (2) is movable by hand (85).

18. The color measurement apparatus (100) according to any one of the previous claims, the color measurement apparatus (100) being portable.

## Patentansprüche

1. Farbmessvorrichtung (100) zum Messen einer Farbe auf einem gedruckten Element (9), aufweisend:
- einen ersten Körper (1);
- einen zweiten Körper (2) mit einem Sensor (26) zum Messen von Farbdaten eines gedruckten Elements (9), wobei der zweite Körper (2) relativ zum ersten Körper (1) entlang einer Messrichtung (210) bewegbar ist;
- eine Führungsschiene (3) zum Führen der Bewegung des zweiten Körpers (2) relativ zum ersten Körper (1), wobei die Führungsschiene (3) zwischen dem ersten Körper (1) und dem zweiten Körper (2) positioniert ist,
wobei der zweite Körper (2) verschiebbar an der Führungsschiene (3) montiert ist und entlang der Führungsschiene (3) in einer ersten Gleitrichtung (210) gleiten kann,
und wobei die Führungsschiene (3) verschiebbar am ersten Körper (1) montiert ist und entlang des ersten Körpers (1) in einer zweiten Gleitrichtung (310) parallel zur ersten Gleitrichtung (210) gleiten kann,
wodurch die Bewegung des zweiten Körpers (2) relativ zum ersten Körper (1) eine kombinierte Bewegung mit einer Gleitbewegung des zweiten Körpers (2) relativ zur Führungsschiene (3) und einer Gleitbewegung der Führungsschiene (3) relativ zum ersten Körper (1) ist; und
wobei die Farbmessvorrichtung (100) ein Leitmittel (51, 51a, 51b) zum Leiten einer Translationsbewegung der Farbmessvorrichtung (100) entlang einer Translationsrichtung (110) aufweist, die senkrecht zur Messrichtung (210) ist; und
wobei der erste Körper (1) ein erstes Gehäuse (10) mit einer Unterseite (11) aufweist, das Leitmittel mindestens ein Rad oder eine Rolle (51, 51a, 51b) aufweist, wobei das Rad oder die Rolle (51, 51a, 51b) von der Unterseite (11) vorragt und einen Drehzapfen (53) senkrecht zur Translationsrichtung (110) hat.

2. Farbmessvorrichtung (100) nach Anspruch 1, wobei der erste Körper (1) ein erstes Gehäuse (10) mit einer ersten Umfangsseite (13) aufweist und die Führungsschiene (3) an der ersten Umfangsseite (13) montiert ist, wobei die Führungsschiene (3) entlang der ersten Umfangsseite (13) gleiten kann.

3. Farbmessvorrichtung (100) nach Anspruch 2, wobei die erste Umfangsseite (13) zwischen einem ersten Ende (131) und einem zweiten Ende (132) enthalten ist, die Führungsschiene (3) zwischen einer ersten Position und einer zweiten Position bewegbar ist, wobei sich die Führungsschiene (3) in der ersten Position an einer mittleren Position befindet, die zwischen dem ersten Ende (131) und zweiten Ende (132) zentriert ist, und die Führungsschiene (3) in der zweiten Position außermittig ist und von einem (131) des ersten Endes (131) und zweiten Endes (132) vorragt.

4. Farbmessvorrichtung (100) nach Anspruch 3, wobei die Führungsschiene (3) darüber hinaus zwischen der ersten Position und einer dritten Position bewegbar ist, wobei die Führungsschiene (3) in der dritten Position außermittig ist und von dem anderen (132) des ersten Endes (131) und zweiten Endes (132) vorragt, wobei die erste Position zwischen der zweiten Position und der dritten Position liegt.

5. Farbmessvorrichtung (100) nach Anspruch 3 oder 4, wobei die Führungsschiene (3) eine Länge (L3) hat und in der zweiten Position und/oder dritten Position eine Länge (L33, L34) eines Führungsschienenabschnitts, der vom jeweiligen ersten Ende (131) oder zweiten Ende (132) vorragt, mehr als die Hälfte der Länge (L3) der Führungsschiene (3) beträgt.

6. Farbmessvorrichtung (100) nach einem der Ansprüche 3 bis 5, wobei die erste Umfangsseite (13) eine Länge (L13) hat, die zwischen dem ersten Ende (131) und dem zweiten Ende (132) enthalten ist, und die Führungsschiene (3) eine Länge (L3) hat, die kleiner ist als die Länge (L13) der ersten Umfangsseite (13), wodurch die Führungsschiene (3) in der ersten Position vollständig zwischen dem ersten Ende (131) und dem zweiten Ende (132) angeordnet ist.

7. Farbmessvorrichtung (100) nach einem der vorhergehenden Ansprüche, wobei das Leitmittel zwei der Räder oder Walzen (51a, 51b) aufweist, wobei die beiden Räder oder Walzen (51a, 51b) voneinander beabstandet und an einem gemeinsamen Drehzapfen (53) montiert sind, wodurch die beiden Räder oder Walzen (51a, 51b) so ausgelegt sind, sich gemeinsam zu drehen.

8. Farbmessvorrichtung (100) nach einem der vorhergehenden Ansprüche 2 bis 7, wobei das erste Gehäuse (10) eine zweite Umfangsseite (14) hat, die erste Umfangsseite (13) und zweite Umfangsseite (14) entgegengesetzte Seiten des ersten Gehäuses (10) sind und das Rad oder die Rolle (51, 51a, 51b) nahe der zweiten Umfangsseite (14) ist.

9. Farbmessvorrichtung (100) nach Anspruch 8, ein Reibungselement (59) aufweisend, das an der Unterseite (11) nahe der ersten Umfangsseite (13) positioniert ist, wobei im Gebrauch der erste Körper (1) auf einem Auflagetisch (80) aufliegt, die Unterseite (11) dem Auflagetisch (80) zugewandt ist und das Reibungselement (59) dazu ausgelegt ist, jeder Bewegung des ersten Körpers (1) auf dem Auflagetisch (80) entgegenzuwirken, indem eine Reibung zwischen dem Reibungselement (59) und dem Auflagetisch (80) erzeugt wird.

10. Farbmessvorrichtung (100) nach Anspruch 9, wobei die Unterseite (11) mindestens eine Auswölbung (56) aufweist, die zwischen dem Reibungselement (59) und dem Rad oder der Rolle (51, 51a, 51b) positioniert ist, wobei die Auswölbung (56) ein Vorsprung ist, so dass, wenn der erste Körper (1) auf dem Auflagetisch (80) aufliegt, das Reibungselement (59) und das Rad oder die Rolle (51, 51a, 51b) daran gehindert sind, gleichzeitig den Auflagetisch (80) zu berühren.

11. Farbmessvorrichtung (100) nach Anspruch 10, wobei die Auswölbung (56) zwischen einem Schwerpunkt (M) der Farbmessvorrichtung (100) und dem Rad oder der Rolle (51, 51a, 51b) positioniert ist.

12. Farbmessvorrichtung (100) nach einem der vorhergehenden Ansprüche, wobei der erste Körper (1) eine Verarbeitungseinheit (40) und eine Anzeige (42) aufweist.

13. Farbmessvorrichtung (100) nach einem der vorhergehenden Ansprüche, wobei der zweite Körper (2) mindestens einen Laser-Pointer (52) aufweist, der dazu ausgelegt ist, einen mit der Messrichtung (210) ausgerichteten Strahl (520) auszusenden.

14. Farbmessvorrichtung (100) nach einem der vorhergehenden Ansprüche, wobei der zweite Körper (2) ein zweites Gehäuse (20) und mindestens eine Referenzlasche (54) aufweist, wobei die mindestens eine Referenzlasche (54) vom zweiten Gehäuse (20) entlang der Messrichtung (210) vorragt.

15. Farbmessvorrichtung (100) nach Anspruch 13 oder 14, wobei der zweite Körper (2) ein zweites Gehäuse (20) und zwei Laser-Pointer (52) und/oder zwei Referenzlaschen (54) aufweist, wobei sich die beiden Laser-Pointer (52) und/oder die beiden Referenzlaschen (54) auf entgegengesetzten Seitenflächen (22a, 22b) des zweiten Gehäuses (20) befinden.

16. Farbmessvorrichtung (100) nach einem der vorhergehenden Ansprüche, wobei der zweite Körper (2) eine Kamera (66) aufweist, die dazu ausgelegt ist, ein Bild des gedruckten Elements (9) aufzunehmen.

17. Farbmessvorrichtung (100) nach einem der vorhergehenden Ansprüche, wobei der zweite Körper (2) von Hand (85) bewegbar ist.

18. Farbmessvorrichtung (100) nach einem der vorhergehenden Ansprüche, wobei die Farbmessvorrichtung (100) tragbar ist.

## Revendications

1. Appareil de mesure de couleur (100) pour mesurer une couleur sur un article imprimé (9) comprenant :
un premier corps (1) ;
un second corps (2) comprenant un capteur (26) pour mesurer des données de couleur d'un article imprimé (9), le second corps (2) étant mobile par rapport au premier corps (1) le long d'une direction de mesure (210) ;
un rail de guidage (3) pour guider le déplacement du second corps (2) par rapport au premier corps (1), le rail de guidage (3) étant positionné entre le premier corps (1) et le second corps (2),
dans lequel le second corps (2) est monté de manière coulissante sur le rail de guidage (3) et peut coulisser le long du rail de guidage (3) dans une première direction de coulissement (210),
et dans lequel le rail de guidage (3) est monté de manière coulissante sur le premier corps (1) et peut coulisser le long du premier corps (1) dans une seconde direction de coulissement (310) parallèle à la première direction de coulissement (210),
moyennant quoi le déplacement du second corps (2) par rapport au premier corps (1) est un déplacement combiné comprenant un déplacement coulissant du second corps (2) par rapport au rail de guidage (3) et un déplacement coulissant du rail de guidage (3) par rapport au premier corps (1) ; et
dans lequel l'appareil de mesure de couleur (100) comprend des moyens de direction (51, 51a, 51b) pour diriger un mouvement de translation de l'appareil de mesure de couleur (100) le long d'une direction de translation (110) qui est perpendiculaire à la direction de mesure (210) ; et
dans lequel le premier corps (1) comprend un premier boîtier (10) ayant une face inférieure (11), les moyens de direction comprenant au moins une roue ou un rouleau (51, 51a, 51b), ladite roue ou rouleau (51, 51a, 51b) faisant saillie de la face inférieure (11) et ayant un pivot (53) perpendiculaire à la direction de translation (110).

2. Appareil de mesure de couleur (100) selon la revendication 1, dans lequel le premier corps (1) comprend un premier boîtier (10) ayant un premier côté périmétral (13), le rail de guidage (3) étant monté au niveau dudit premier côté périmétral (13), dans lequel le rail de guidage (3) peut coulisser le long du premier côté périmétral (13).

3. Appareil de mesure de couleur (100) selon la revendication 2, dans lequel le premier côté périmétral (13) est compris entre une première extrémité (131) et une seconde extrémité (132), le rail de guidage (3) étant mobile entre une première position et une deuxième position, dans lequel le rail de guidage (3), dans la première position, est dans une position centrale, centrée entre la première extrémité (131) et la seconde extrémité (132), et le rail de guidage (3), dans la deuxième position, est décentré et fait saillie de l'une (131) parmi ladite première extrémité (131) et la seconde extrémité (132).

4. Appareil de mesure de couleur (100) selon la revendication 3, dans lequel le rail de guidage (3) est en outre mobile entre la première position et une troisième position, dans lequel le rail de guidage (3), dans la troisième position, est décentré et fait saillie de l'autre (132) parmi ladite première extrémité (131) et la seconde extrémité (132), la première position étant entre la deuxième position et la troisième position.

5. Appareil de mesure de couleur (100) selon la revendication 3 ou 4, dans lequel le rail de guidage (3) a une longueur (L3) et, dans la deuxième position et/ou dans la troisième position, une longueur (L33, L34) d'une section de rail de guidage faisant saillie de la première extrémité (131) ou de la seconde extrémité (132) respective est supérieure à la moitié de la longueur (L3) du rail de guidage (3).

6. Appareil de mesure de couleur (100) selon l'une quelconque des revendications 3 à 5, dans lequel le premier côté périmétral (13) a une longueur (L13) comprise entre une première extrémité (131) et la seconde extrémité (132), le rail de guidage (3) a une longueur (L3) inférieure à la longueur (L13) du premier côté périmétral (13), moyennant quoi le rail de guidage (3), dans la première position, est complètement agencé entre la première extrémité (131) et la seconde extrémité (132).

7. Appareil de mesure de couleur (100) selon l'une quelconque des revendications précédentes, dans lequel le moyen de direction comprend deux desdites roues ou rouleaux (51a, 51b), les deux roues ou rouleaux (51a, 51b) étant espacés et étant montés sur un pivot (53) commun, moyennant quoi les deux roues ou rouleaux (51a, 51b) sont configurés pour tourner conjointement.

8. Appareil de mesure de couleur (100) selon l'une quelconque des revendications 2 à 7, dans lequel le premier boîtier (10) a un second côté périmétral (14), le premier côté périmétral (13) et le second côté périmétral (14) étant des côtés opposés du premier boîtier (10), ladite roue ou le rouleau (51, 51a, 51b) étant à proximité du second bord périmétral (14).

9. Appareil de mesure de couleur (100) selon la revendication 8, comprenant un élément de friction (59) positionné au niveau d'une face inférieure (11) et à proximité du premier côté périmétral (13), dans lequel, à l'usage, le premier corps (1) s'appuie sur une table de support (80), la face inférieure (11) faisant face à la table de support (80), et l'élément de friction (59) est configuré pour contraster tout déplacement du premier corps (1) sur la table de support (80) en créant une friction entre l'élément de friction (59) et la table de support (80).

10. Appareil de mesure de couleur (100) selon la revendication 9, dans lequel la face inférieure (11) comprend au moins un renflement (56) positionné entre l'élément de friction (59) et la roue ou le rouleau (51, 51a, 51b), le renflement (56) étant une saillie de sorte que, lorsque le premier corps (1) s'appuie sur la table de support (80), l'élément de friction (59) et la roue ou rouleau (51, 51a, 51b) ne peuvent pas être simultanément en contact avec la table de support (80).

11. Appareil de mesure de couleur (100) selon la revendication 10, dans lequel le renflement (56) est positionné entre un centre de gravité (M) de l'appareil de mesure de couleur (100) et la roue ou rouleau (51, 51a, 51b).

12. Appareil de mesure de couleur (100) selon l'une quelconque des revendications précédentes, dans lequel le premier corps (1) comprend une unité de traitement (40) et un affichage (42).

13. Appareil de mesure de couleur (100) selon l'une quelconque des revendications précédentes, dans lequel le second corps (2) comprend au moins un pointeur laser (52) configuré pour émettre un faisceau (520) aligné avec la direction de mesure (210).

14. Appareil de mesure de couleur (100) selon l'une quelconque des revendications précédentes, dans lequel le second corps (2) comprend un second boîtier (20) et au moins une languette de référence (54), la au moins une languette de référence (54) faisant saillie du second boîtier (20) le long de la direction de mesure (210).

15. Appareil de mesure de couleur (100) selon la revendication 13 ou 14, dans lequel le second corps (2) comprend un second boîtier (20) et deux pointeurs laser (52) et/ou deux languettes de référence (54), les deux pointeurs laser (52) et/ou les deux languettes de référence (54) étant positionnés au niveau des faces latérales opposées (22a, 22b) du second boîtier (20).

16. Appareil de mesure de couleur (100) selon l'une quelconque des revendications précédentes, dans lequel le second corps (2) comprend une caméra (66) configurée pour prendre une image de l'article imprimé (9).

17. Appareil de mesure de couleur (100) selon l'une quelconque des revendications précédentes, dans lequel le second corps (2) est mobile manuellement (85).

18. Appareil de mesure de couleur (100) selon l'une quelconque des revendications précédentes, l'appareil de mesure de couleur (100) étant portable.
